Europäisches Patentamt

**European Patent Office**

**Office européen des brevets**

(11) Veröffentlichungsnummer: **0 050 256**
**B1**

(12) **EUROPÄISCHE PATENTSCHRIFT**

(45) Veröffentlichungstag der Patentschrift:
03.10.84

(21) Anmeldenummer: **81107907.8**

(22) Anmeldetag: **05.10.81**

(51) Int. Cl.³: **F 02 F 3/02**, F 16 J 1/02

(54) Leichter Tauchkolben für Verbrennungsmotoren.

(30) Priorität: **18.10.80 DE 3039382**

(43) Veröffentlichungstag der Anmeldung:
**28.04.82 Patentblatt 82/17**

(45) Bekanntmachung des Hinweises auf die Patenterteilung:
**03.10.84 Patentblatt 84/40**

(84) Benannte Vertragsstaaten:
**DE FR GB IT**

(56) Entgegenhaltungen:
**EP - A - 0 009 269**
**FR - A - 1 539 623**
**FR - A - 2 219 346**
**FR - E - 86 284**
**GB - A - 153 202**

(73) Patentinhaber: **MAHLE GMBH, Patentabteilung Pragstrasse 26-46, D-7000 Stuttgart 50 (DE)**

(72) Erfinder: **Ripberger, Emil, Ing.-Grad., Brunnenstrasse 6, D-7148 Remseck 3 (DE)**

(74) Vertreter: **Pfusch, Volker, Dipl.-Ing., MAHLE GMBH, Patentabteilung Pragstrasse 26-46, D-7000 Stuttgart 50 (DE)**

EP 0 050 256 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Die Erfindung betrifft einen leichten Tauchkolben, für Verbrennungsmotoren nach dem Oberbegriff des Anspruchs 1.

Ein solcher Kolben ist z.B. aus der FR-A-2219346 bekannt.

Es ist die Aufgabe der Erfindung, das Gewicht eines derartigen Kolbens bei Beibehaltung des gleichen Materials durch konstruktive Massnahmen bei der Ausbildung des Schaftes erheblich zu vermindern. Gleichzeitig wird ein elastischeres Verhalten des Kolbens im Schaftbereich angestrebt.

Gelöst wird diese Aufgabe durch eine Ausbildung des Kolbenschaftes nach den kennzeichnenden Merkmalen des Anspruchs 1.

Als besonders zufriedenstellend hat sich die Lösung nach Anspruch 2 erwiesen.

Weitere zweckmässige Ausgestaltungen geben die weiteren Unteransprüche wieder.

Ein Ausführungsbeispiel der Erfindung ist in der Zeichnung dargestellt und zwar zeigen:

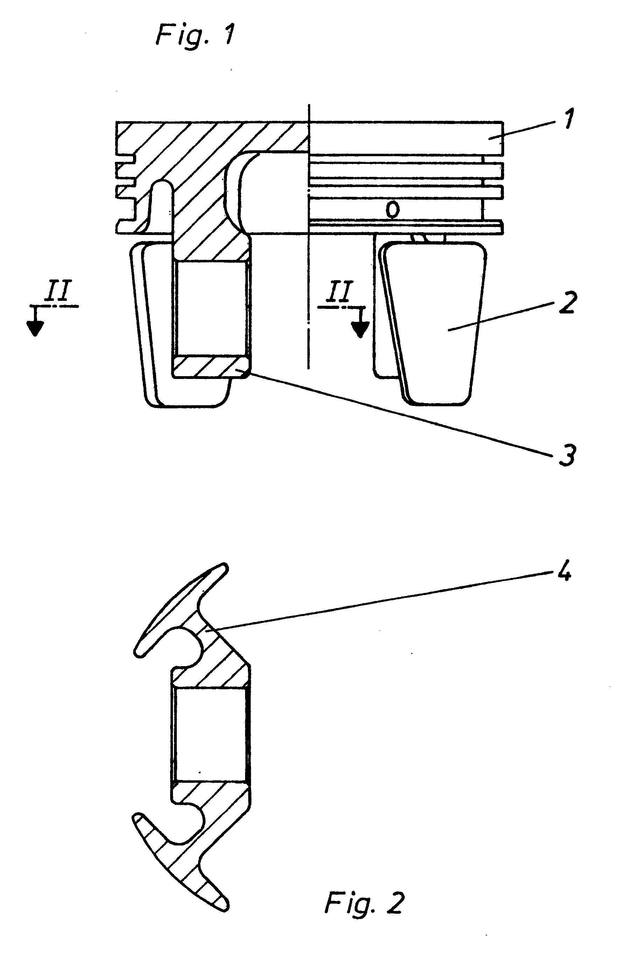

Fig. 1 den Kolben zum Teil im Schnitt (linker Teil) und zum Teil in der Ansicht (rechter Teil);

Fig. 2 einen Schnitt durch den Kolben nach Linie II–II.

Der Kolben ist aus Aluminium und besteht im wesentlichen aus dem Kopfteil 1 mit Ringpartie, den Führungsplatten 2 im Schaftbereich sowie den am Kolbenboden frei angehängten Bolzennaben 3. Mit dem Kolbenoberteil stehen die Führungsplatten 2 lediglich über die von den Bolzennaben 3 ausgehenden Rippen 4 in Verbindung. Die Rippen 4 sind zur Bolzenachse in einem Winkel von 45° mit Scheitelpunkt in Kolbenachse angeordnet. Damit liegen die Rippen 4 auf der 45° Diagonalebene zwischen Bolzen- und Pleuelschwingebene. Die Anordnung der Rippen 4 unter einem solchen Winkel sorgte beim erfindungsgemässen Kolben für ausgezeichnete Laufergebnisse. Die Führungsplatten sind in Umfangsrichtung flächenmässig symmetrisch zu der 45° Diagonalebene und damit gleichfalls zu den Rippen 4. An ihrem oberen Ende überspannen die Führungsplatten 2 je einen Winkel von etwa 40°. Nach unten verjüngen sich die Führungsplatten und zwar auf ihren beiden Längsseiten jeweils unter einem Winkel von 10°. Eine derartige sich nach unten verjüngende Flächenausbildung erwies sich in bezug auf Gewichtseinsparung und Laufverhalten des Kolbens als besonders günstig. Die Führungsplatten sind mit Abstand unterhalb des untersten Ringsteges der Ringpartie angeordnet.

Als besonderer Vorteil der erfindungsgemässen Ausführungsform hat sich gezeigt, dass der Kolben mit extrem kleinen Spielen im Motorzylinder eingesetzt werden kann. Es kann vor allem auf die üblicherweise zur Einhaltung geringer Spiele erforderlichen besonderen Regelglieder, wie z.B. Stahlstreifen ganz verzichtet werden. Die Aussenflächen der Führungsplatten können einfache Abschnitte eines Zylindermantels sein, d.h. sie brauchen weder ballig noch oval ausgebildet zu sein. Durch die erfindungsgemäss nur noch verbleibende geringe Schaftfläche wird die Reibung zwischen Kolben und Zylinder verringert. Die erfindungsgemässe Anordnung der Führungsplatten sichert dem Kolben nicht nur in der Pleuelschwingebene eine ausgezeichnete Führung, sondern gleichermassen auch in der hierzu querliegenden Ebene.

**Patentansprüche**

1. Leichter Tauchkolben, insbesondere aus Leichtmetall, für Verbrennungsmotoren, mit frei am Kolbenboden angehängten Bolzennaben (3), mit welchen Kolbenschaftsegmente über je zwei sich in Kolbenlängsrichtung erstreckende Rippen (4) verbunden sind, dadurch gekennzeichnet, dass die Schaftsegmente ausschliesslich aus vier unterhalb eines die unterste Ringnut nach unten begrenzenden schmalen Ringsteges einzeln an die zu den Bolzennaben (3) verlaufenden Rippen (4) angebundenen Führungsplatten (2) mit der Zylinderlauffläche angepassten Aussenflächen bestehen, die sich von der zwischen Bolzen- und Pleuelschwingebene unter 45° liegenden Diagonalebene aus gesehen jeweils um etwa 15 bis 25° zu beiden Seiten erstrecken.

2. Leichter Tauchkolben nach Anspruch 1, dadurch gekennzeichnet, dass die Führungsplatten (2) mit Abstand unterhalb des untersten Ringsteges der Ringpartie angeordnet sind.

3. Leichter Tauchkolben nach Anspruch 1 oder 2, dadurch gekennzeichnet, dass sich die Führungsplatten (2) von der 45° Diagonalebene jeweils nur um etwa 15 bis 20° zu beiden Seiten erstrecken.

4. Leichter Tauchkolben nach einem der vorhergehenden Ansprüche, dadurch gekennzeichnet, dass sich die Führungsplatten (2) zu beiden Seiten der Diagonalebene symmetrisch erstrecken.

5. Leichter Tauchkolben nach einem der vorhergehenden Ansprüche, dadurch gekennzeichnet, dass die Breite der Führungsplatten (2) von oben nach unten abnimmt.

6. Leichter Tauchkolben nach einem der vorhergehenden Ansprüche, dadurch gekennzeichnet, dass der von den Führungsplatten (2) an deren axial oberem Ende überspannte Umfangswinkel etwa 10° grösser ist als derjenige an deren axial unterem Ende.

7. Leichter Tauchkolben nach einem der vorhergehenden Ansprüche, dadurch gekennzeichnet, dass die Rippen (4) in einem zur Bolzenachse gerichteten Winkel mit zum Kolbeninneren gerichteten Scheitel von 40 bis 50° verlaufen.

8 Leichter Tauchkolben nach Anspruch 7, dadurch gekennzeichnet, dass die Rippen (4) in einem Winkel von 45° verlaufen.

9. Leichter Tauchkolben nach einem der vorhergehenden Ansprüche, dadurch gekennzeichnet, dass die Fläche der Führungsplatten (2) auf der Druckseite grösser ist als auf der Gegendruckseite.

10. Leichter Tauchkolben nach einem der vorhergehenden Ansprüche, dadurch gekennzeichnet, dass die Führungsplatten (2) nach unten über die Bolzennaben (3) hinausragen.

11. Leichter Tauchkolben nach einem der vorhergehenden Ansprüche, dadurch gekennzeichnet, dass die Führungsplatten (2) im Bereich ihrer Längskanten aussen verrundet oder in bezug auf ihre Aussenfläche leicht nach innen eingezogen sind.

**Claims**

1. Light-weight plunger piston, particularly of light metal, for combustion engines, with bolt hubs 3 which are freely suspended on the piston head and with which are connected piston shaft segments, each via two ribs 4 extending in the longitudinal direction of the piston, characterized by the fact that the shaft segments exclusively consist of four guide plates 2 which, underneath a narrow ring land forming the lower boundary of the lowest annular groove, are individually connected to the ribs 4 which go to the bolt hubs 3, the guide plates having outer surfaces which are adapted to the contact surface of the cylinder and which, as viewed from the diagonal plane situated at 45° between the bolt plane and the connecting rod oscillation plane, in each case extend by about 15–25° on both sides.

2. Light-weight plunger piston in accordance with claim 1, characterized by the fact that the guide plates 2 are situated at a certain distance underneath the lowest ring land of the annular part.

3. Light-weight plunger piston in accordance with claim 1 or 2, characterized by the fact that the guide plates 2 in each case only extend by about 15–20° towards both sides from the diagonal plane situated at 45°.

4. Light-weight plunger piston in accordance with one of the foregoing claims, characterized by the fact that the guide plates 2 extend summetrically on both sides of the diagonal plane.

5. Light-weight plunger piston in accordance with one of the foregoing claims, characterized by the fact that the width of the guide plates 2 decreases from the top downwards.

6. Light-weight plunger piston in accordance with one of the foregoing claims, characterized by the fact that the peripheral angle spanned by the guide plates 2 at their axially uppermost end is about 10° greater than the angle at their axially lowest end.

7. Light-weight plunger piston in accordance with one of the foregoing claims, characterized by the fact that the ribs 4 are set at an angle of 40–50° in relation to the axis of the bolt, the apex pointing towards the interior of the plunger piston.

8. Light-weight plunger piston in accordance with claim 7, characterized by the fact that the ribs 4 take their course at an angle of 45°.

9. Light-weight plunger piston in accordance with one of the foregoing claims, characterized by the fact that the surface of the guide plates 2 is larger on the pressure side than on the counterpressure side.

10. Light-weight plunger piston in accordance with one of the foregoing claims, characterized by the fact that the guide plates 2 extend downwards beyond the hubs 3 of the bolts.

11. Light-weight plunger piston in accordance with one of the foregoing claims, characterized by the fact that the guide plates 2, in the zone of their longitudinal edges, are rounded towards the outside or recede to a slight distance inwards in relation to their outer surface.

**Revendications**

1. Piston plongeur léger, fabriqué en particulier en métal léger et destiné à des moteurs à combustion interne, comportant un moyeu d'axe (3) suspendu librement au fond dudit piston et auquel des segments du corps de ce piston sont reliés par l'intermédiaire de deux nervures respectives (4) s'étendant dans le sens longitudinal dudit piston, caractérisé par le fait que les segments du corps se composent exclusivement de quatre plaques de guidage (2) rendues individuellement solidaires des nervures (4) convergeant vers le moyeu d'axe (3) au-dessous d'un étroit segment annulaire délimitant vers le bas la gorge annulaire inférieure, plaques dont les surfaces externes sont adaptées à la surface de glissement du cylindre et qui s'étendent de part et d'autre, d'un angle respectif d'environ 15 à 25°, à partir du plan diagonal passant à 45° entre le plan de l'axe et le plan de la bielle.

2. Piston plongeur léger selon la revendication 1, caractérisé par le fait que les plaques de guidage (2) sont disposées à distance au-dessous du segment annulaire inférieur de la partie annulaire.

3. Piston plongeur léger selon la revendication 1 ou 2, caractérisé par le fait que les plaques de guidage (2) s'étendent seulement d'un angle respectif d'environ 15 à 20° de part et d'autre du plan diagonal passant à 45°.

4. Piston plongeur léger selon l'une des revendications précédentes, caractérisé par le fait que les plaques de guidage (2) s'étendent symétriquement de part et d'autre du plan diagonal.

5. Piston plongeur léger selon l'une des revendications précédentes, caractérisé par le fait que la largeur des plaques de guidage (2) décroît de haut en bas.

6. Piston plongeur léger selon l'une des revendications précédentes, caractérisé par le fait que l'angle décrit à la périphérie par l'extrémité axialement supérieure des plaques de guidage (2) est supérieur d'environ 10° à l'angle décrit par l'extrémité axialement inférieure desdites plaques.

7. Piston plongeur léger selon l'une des revendications précédentes, caractérisé par le fait que les nervures (4) s'étendent en formant avec l'axe du piston un angle de 40 à 50° dont le sommet est orienté vers l'intérieur dudit piston.

8. Piston plongeur léger selon la revendication 7, caractérisé par le fait que les nervures (4) s'étendent selon un angle de 45°.

9. Piston plongeur léger selon l'une des revendications précédentes, caractérisé par le fait que la surface des plaques de guidage (2) est plus grande du côté pression que du côté contre-pression.

10. Piston plongeur léger selon l'une des revendications précédentes, caractérisé par le fait que les plaques de guidage (2) font saillie vers le bas au-delà du moyeu d'axe (3).

11. Piston plongeur léger selon l'une des revendications précédentes, caractérisé par le fait que les plaques de guidage (2) sont arrondies extérieurement au voisinage de leurs bords longitudinaux, ou bien sont légèrement infléchies vers l'intérieur par rapport à leur surface externe.

*Fig. 1*

1

II

II

2

3

4

*Fig. 2*